# EUROPEAN PATENT APPLICATION

(11) **EP 3 370 143 A1**
(43) Date of publication of application: **05.09.2018**
(21) Application number: 18153457.9
(22) Date of filing: 25.01.2018
(51) Int. Cl.: G06F 3/147, G06Q 10/08, G06K 9/00, G06K 9/18, G06Q 20/20

(54) **LABEL GENERATION APPARATUS AND METHOD FOR GENERATING COMMODITY LABEL INDICATING COMMODITY DISPLAY LAYOUT**

(30) Priority: 01.03.2017 JP 2017038404
(71) Applicant: Toshiba TEC Kabushiki Kaisha, Tokyo 141-8562 (JP)
(72) Inventor: TAIRA, Kazuki, Shinagawa-ku,, Tokyo 141-8562 (JP); KAKINO, Tomonari, Shinagawa-ku,, Tokyo 141-8562 (JP); YASUNAGA, Masaaki, Shinagawa-ku,, Tokyo 141-8562 (JP)
(74) Representative: Takeuchi, Maya

(57) **Abstract**

A label generation apparatus includes an image acquisition interface, a printer interface, and a processor programmed to acquire through the image acquisition interface a captured image including an article and a shelf on which the article is located, to specify information about the article and a position of the article on the shelf based on the captured image, generate shelving allocation information based on the information about the article and the position of the article on the shelf, and communicate with a printer through the printer interface to generate a label of the article based on the shelving allocation information.

## Description

### FIELD

Embodiments described herein relate generally to a label generation apparatus and a method for generating a commodity label indicating the display position and display layout of a commodity on a display shelf

### BACKGROUND

There is a commodity shelf installed in a retail store having a commodity label indicating commodity information in the vicinity of a commodity placed on the commodity shelf. The commodity label has commodity display information indicating a display position of a commodity in addition to a commodity price and the like.

Conventionally, in order to generate a commodity label, a label generation apparatus needs to receive an input such as a display position of a commodity from an external operator.

### SUMMARY OF INVENTION

To solve the above-cited problems, there is provided a label generation apparatus, comprising:
an image acquisition interface;
a printer interface; and
a processor programmed to acquire through the image acquisition interface a captured image including an article and a shelf on which the article is located, to specify information about the article and a position of the article on the shelf based on the captured image, generate shelving allocation information based on the information about the article and the position of the article on the shelf, and communicate with a printer through the printer interface to generate a label of the article based on the shelving allocation information.

In an exemplary embodiment the processor may be programmed to generate information, including article display information composed of position information indicating the position where the article is located on a shelf and layout information indicating the layout of the article on the shelf, and the label includes at least a part of the article display information thereon.

In the embodiment the label preferably may be generated according to a label format corresponding to the article display information.

In the embodiment the processor preferably may be programmed to acquire article information about the article and generate the shelving allocation information including the article information, and
the label indicates at least a portion of the article information.

Preferably the label generation apparatus according to the embodiment may further comprise a camera connected to the image acquisition interface.

In the embodiment the printer preferably may be one of a thermal printer and an ink printer.

In the embodiment the label preferably may comprise the price of an article and the position of the article on a shelf.

Preferably the label generation apparatus according to the embodiment may further comprise:
a memory storing images of articles correlated with information about the article, wherein
the processor programmed to compare the captured image to images stored in the memory, to identify article information related to the imaged article.

In another exemplary embodiment there is also provided a label generation apparatus, comprising:
an image acquisition interface;
a printer interface; and
a controller circuit configured to compare an image acquired through the image acquisition interface to preexisting image data and identify information about an article in the image, and generate article data and article location data and transmit the article data and article location data through the printer interface.

Preferably the label generation apparatus according to the embodiment may further comprise a camera integrally connected thereto and connected to the controller circuit through the image acquisition interface.

Preferably the label generation apparatus according to the embodiment may further comprise a printer integrally connected thereto and connected to the controller circuit through the printer interface.

Preferably the label generation apparatus according to the embodiment may further comprise:
a wireless communication interface through which the controller circuit receives the article data.

In the embodiment the article data preferably may include the price of the article and the article location data preferably may include the position of the article on the shelf.

Preferably the label generation apparatus according to the embodiment may further comprise a non-volatile memory configured to store the preexisting image data.

In the embodiment the article location data preferably may be acquired from at least one of the image acquired through the image acquisition interface or the location of the label generation apparatus when the image was acquired.

In yet another exemplary embodiment there is also provided a method for generating an article label indicating a display layout of an article, comprising:
acquiring a captured image containing an image of the article and of a shelf on which the article is located;
specifying information about the article and a position of the article from the captured image;
generating shelf allocation information based on the information about the article and the position of the article; and
generating a label for the article based on the shelf allocation information.

In the embodiment the shelf allocation information preferably may include information relating to the location of the article on a shelf, and the location of the shelf.

Preferably the method according to the embodiment may further comprise:
comparing the captured image of the article with stored images of articles in a database; and
extracting the information about the article from the database.

Preferably the method according to the embodiment may further comprise generating the label using the information about the article extracted from the database.

Preferably the method according to the embodiment may further comprise extracting the information relating to the location of the article on a shelf from the captured image.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a block diagram of a label generation system according to an embodiment;
Fig. 2 is a diagram illustrating an example of a captured image according to the embodiment;
Fig. 3 is a diagram illustrating contents of shelving allocation information according to the embodiment;
Fig. 4 is a diagram illustrating an example of a commodity label according to the embodiment;
Fig. 5 is a flowchart exemplifying the operation of a label generation apparatus according to the embodiment;
Fig. 6 is a flowchart exemplifying the operation of the label generation apparatus according to the embodiment; and
Fig. 7 is a flowchart exemplifying the operation of the label generation apparatus according to the embodiment.

### DETAILED DESCRIPTION

In accordance with an embodiment, a label generation apparatus comprises an image acquisition interface, a printer interface, and a processor programmed to acquire through the image acquisition interface a captured image including an article and a shelf on which the article is located, to specify information about the article and a position of the article on the shelf based on the captured image, generate shelving allocation information based on the information about the article and the position of the article on the shelf, and communicate with a printer through the printer interface to generate a label of the article based on the shelving allocation information.

In a label generation system according to an embodiment, a commodity label indicating information about a commodity (article) on a commodity shelf is generated. Furthermore, the commodity label indicates information on the display location of the commodity. The label generation system acquires an image of the commodity shelf that includes a commodity label. The label generation system generates a commodity label based on the image.

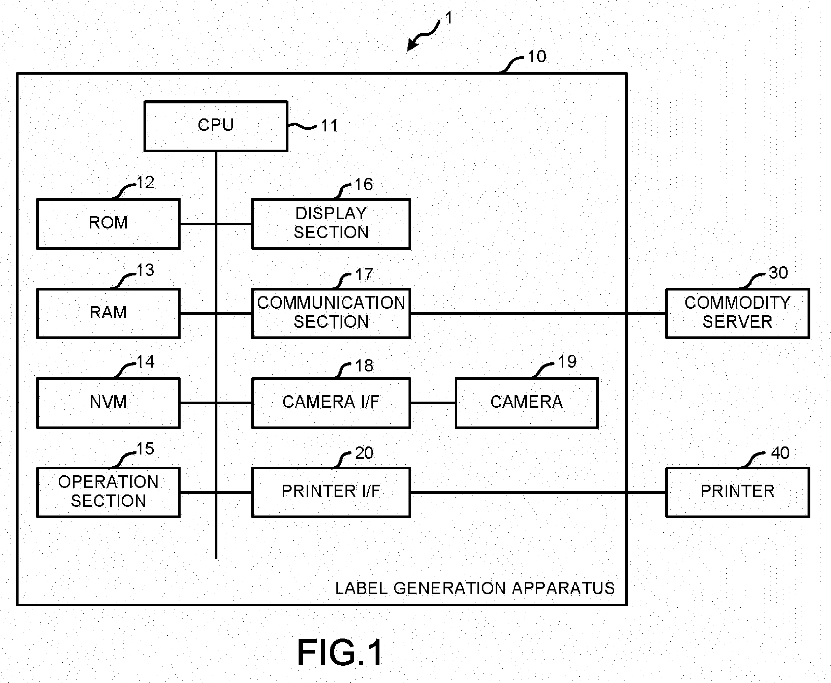

Fig. 1 is a block diagram exemplifying the constitution of a label generation system 1 according to the embodiment. As shown in Fig. 1, the label generation system 1 includes a label generation apparatus 10, a commodity server 30, and a printer 40. In addition to the constitution shown in Fig. 1, the label generation system 1 may have additional components as necessary or exclude a specific component.

The label generation apparatus 10 generates a commodity label based on an image from a camera 19 described later. The label generation apparatus 10 prints the generated commodity label using the printer 40. The label generation apparatus 10 is described in detail later.

The commodity server 30 is connected to the label generation apparatus 10 via an Internet or an independent communication network. The commodity server 30 transmits commodity information (article information) and a label format to the label generation apparatus 10.

For example, the commodity server 30 stores a commodity database in which the commodity (e.g., a commodity code) and the commodity information are associated with each other based on an operation of an operator.

Furthermore, the commodity server 30 stores the label format based on an operation of the operator. For example, the commodity server 30 stores plural label formats. For example, the commodity server 30 stores a label format corresponding to commodity display information (article display information). The commodity server 30 may store a label format corresponding to a format for the commodity shelf or a format for the commodity information.

The commodity information, the label format and the commodity display information are described later herein.

For example, if a request including the commodity code is received from the label generation apparatus 10, the commodity server 30 refers to the commodity database to acquire the commodity information corresponding to the commodity code. The commodity server 30 transmits the acquired commodity information to the label generation apparatus 10 as a response to the request.

If a request including the commodity display information from the label generation apparatus 10 is received, the commodity server 30 acquires the label format corresponding to the commodity display information. The commodity server 30 transmits the acquired label format to the label generation apparatus 10 as the response to the request.

The printer 40 prints the commodity label according to a signal received from the label generation apparatus 10. For example, the printer 40 is composed of a supply section for supplying a paper, a conveyance motor for conveying the paper, a motor controller for controlling the conveyance motor, and a printing section for printing on the paper.

For example, the supply section stores paper for printing the commodity label. The conveyance motor conveys the paper from the supply section to the printing section in response to a signal from the motor controller.

The printing section prints the commodity label on the paper supplied from the supply section. For example, the printing section ejects ink onto the paper to form an image.

If the paper is a thermal paper, the printing section selectively heats the paper to form a commodity label. For example, the printing section includes a thermal head for heating the paper, a thermal head controller for controlling the thermal head, and the like.

Next, the label generation apparatus 10 is described.

As shown in Fig. 1, the label generation apparatus 10 includes a CPU 11, a ROM 12, a RAM 13, an NVM (non-volatile memory 14, an operation section 15, a display section 16, a communication section 17, a camera interface 18, a camera 19, a printer interface 20, and the like. These sections are connected to each other via a data bus line. The label generation apparatus 10 may have a component as necessary in addition to the components shown in Fig. 1 or may exclude a specific component.

The CPU 11 (processor) has a function of controlling the entire operation of the label generation apparatus 10. The CPU 11 may include an internal cache and various interfaces. The CPU 11 realizes various processing by executing programs stored in an internal memory, the ROM 12 or the NVM 14 in advance.

A part of the various functions realized by executing the programs by the CPU 11 may be realized by a hardware circuit, such as a controller circuit.

The ROM 12 is a nonvolatile memory in which a control program and control data are stored in advance. The control program and the control data stored in the ROM 12 are incorporated therein in advance according to a specification of the label generation apparatus 10. For example, the ROM 12 stores a program (e.g., BIOS) for controlling a circuit board of the label generation apparatus 10.

The RAM 13 is a volatile memory. The RAM 13 temporarily stores data being processed by the CPU 11. The RAM 13 stores various application programs based on a command from the CPU 11. The RAM 13 may store data necessary for executing the application program, an execution result of the application program, and the like.

The NVM 14 is a nonvolatile memory capable of writing and rewriting data. The NVM 14 is composed of, for example, a hard disk, a SSD, an EEPROM® Technology, a flash memory, or the like. The NVM 14 stores control programs, applications, and various data in response to the intended use of the label generation apparatus 10.

The NVM 14 may store dictionary information useful for recognizing a commodity by image processing of its image. For example, the dictionary information includes an image of the commodity. The dictionary information may be feature correlation data extracted from the image of the commodity or a distribution of the feature correlation data. The correlation data is compared to the image, or image data of the image, or the article acquired by the camera and thus the camera interface, to identify the article or information about the article.

Various operation instructions are input into the operation section 15 by an operator of the label generation apparatus 10. The operation section 15 transmits a signal corresponding to the operation instruction input by the operator to the CPU 11. The operation section 15 is, for example, a keyboard, a numeric keypad, a touch panel, and the like.

The display section 16 displays various types of information under the control of the CPU 11. The display section 16 is, for example, a liquid crystal display monitor or the like. If the operation section 15 is the touch panel, the display section 16 may be integrally formed with the operation section 15.

The communication section 17 is, e.g., a wireless communication interface, which is used for transmitting data to, and receiving data from, the commodity server 30. For example, the communication section 17 receives the commodity information and the label format from the commodity server 30. The communication section 17 transmits the received commodity information and label format to the CPU 11. For example, the communication section 17 supports a connection to the Internet. For example, the communication section 17 supports a wireless LAN connection.

The camera interface 18 is used for transmitting data to, and receiving data from, the camera 19 and the CPU 11. For example, the camera interface 18 receives the captured image from the camera 19. The camera interface 18 transmits the received captured image to the CPU 11.

The camera 19 captures an image in response to a signal from the CPU 11. The camera 19 transmits the captured image to the CPU 11. The camera 19 is, for example, a CCD camera or the like. The camera 19 may receive camera settings such as sensitivity or aperture settings from the CPU 11.

The printer interface 20 is used for transmitting data to, and receiving from, the printer 40. For example, the printer interface 20 transmits the data from the CPU 11 to the printer 40. For example, the printer interface 20 supports a USB connection.

For example, the label generation apparatus 10 may be a portable device such as a smartphone, a tablet PC or a notebook PC.

Functions realized by the CPU 11 of the label generation apparatus 10 are described below.

First, the CPU 11 has a function of acquiring the captured image of the image capturing region including the commodity shelf on which the commodity is arranged using the camera 19 (acquisition section).

For example, the operator holds the label generation apparatus 10 and moves to a predetermined commodity shelf in the retail store. The operator inputs a predetermined operation to the operation section 15 and captures an image with the camera 19.

If the predetermined operation is received through the operation section 15, the CPU 11 transmits a signal for capturing an image to the camera 19 via the camera interface 18. The camera 19 captures an image in response to the signal. The camera 19 transmits the captured image to the CPU 11 via the camera interface 18. The CPU 11 acquires the captured image from the camera 19 via the camera interface 18.

The CPU 11 has a function of specifying the commodity shelf contained in the captured image.

For example, the CPU 11 acquires shelf specifying information for specifying the commodity shelf. The shelf specifying information is, for example, an ID for specifying the commodity shelf.

For example, the CPU 11 may receive an input of the shelf specifying information from the operator via the operation section 15.

The CPU 11 may acquire the shelf specifying information based on the acquired captured image. For example, the commodity shelf is provided with a code indicating the shelf specifying information, such as a barcode or a two-dimensional code uniquely associated with the shelf. The CPU 11 extracts the code from the captured image and decodes the code to acquire the shelf specifying information. The CPU 11 may read out a character string included in the commodity shelf to acquire the shelf specifying information using a reader or the like, or from the captured image of the shelf.

The commodity shelf may include a wireless device such as a RFID. For example, the CPU 11 acquires the shelf specifying information from the wireless device via the communication section and the like.

The CPU 11 may specify the position of the label generation apparatus 10, based on a map generated by three-dimensional modeling of the layout in the retail store, to position the label generation apparatus to using the shelf specifying information of the position. The CPU 11 may read out an optical sign previously arranged in the retail store from the captured image and specify the position of the label generation apparatus 10 to acquire the shelf specifying information of the position. The CPU 11 may specify the position of the label generation apparatus 10 from wireless information such as RFID or Bluetooth® Technology to acquire the shelf specifying information of the position.

The method by which the CPU 11 specifies the commodity shelf position is not limited to a specific method.

The CPU 11 has a function of identifying or specifying the commodity and the position of the commodity from the captured image (specifying section).

In this case, the CPU 11 specifies the commodity code associated with the commodity.

For example, the CPU 11 specifies a commodity region in which the commodity appears from the captured image. For example, the CPU 11 may specify the commodity region based on a background color of the commodity shelf. The CPU 11 may specify the commodity region by detecting edges. The CPU 11 specifies the position of the specified commodity region as the position of the commodity.

After specifying the commodity region, the CPU 11 specifies the commodity appearing in the commodity region. For example, the CPU 11 acquires the dictionary image information stored in the NVM 14. The CPU 11 specifies the commodity appearing in the commodity region by matching acquired dictionary image information with the image of the commodity region. The method by which the CPU 11 specifies the commodity and the position of the commodity is not limited to a specific way.

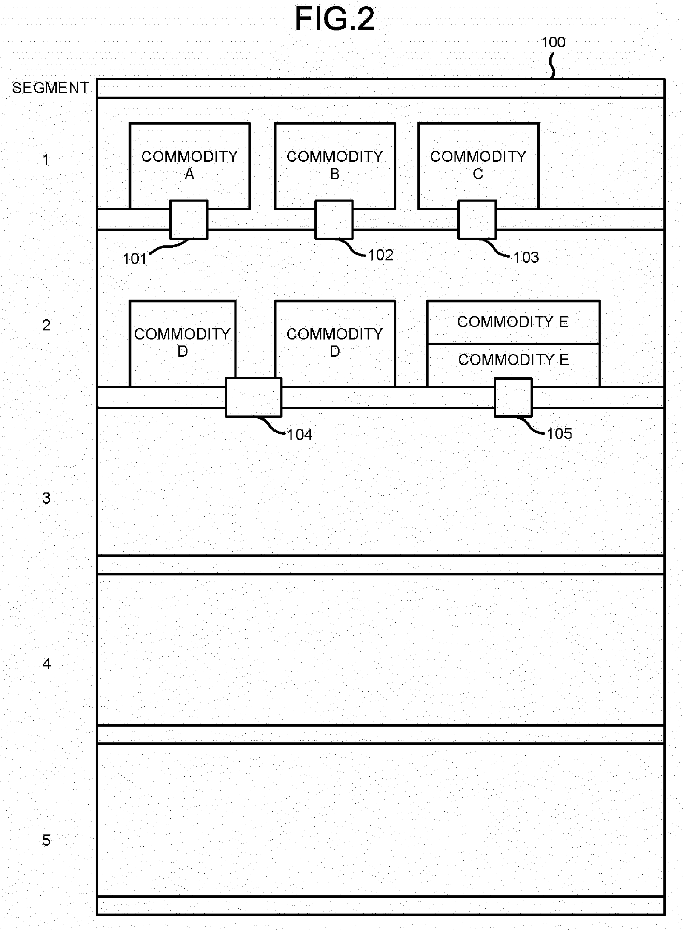

Fig. 2 shows an example of the captured image.

As shown in Fig. 2, the captured image contains an image of a commodity shelf 100. Herein, the commodity shelf 100 has 5 segments or shelf levels.

The CPU 11 specifies the commodity and the position of the commodity from the captured image. For example, the CPU 11 recognizes, starting from the left in the first segment, a commodity A, a commodity B and a commodity C. The CPU 11 recognizes, starting from the left in the second segment, a commodity D, a second commodity D and a commodity E. The CPU 11 recognizes the two commodities E in a vertically stacked position.

The commodity shelf 100 includes label assignment regions 101 to 105. The label assignment regions 101 to 105 are regions to which commodity labels are assigned.

The commodity shelf 100 has the label assignment regions 101 to 103 below the commodity A, the commodity B and the commodity C on a partition plate configuring the first segment. The commodity shelf 100 has a label assignment region 104 between two commodities D on a partition plate configuring the second segment. The commodity shelf 100 has the label assignment region 105 below the commodity E on the partition plate configuring the second segment.

The CPU 11 has the function of generating the shelving allocation information indicating the layout by which the commodities are displayed on the commodity shelf based on the captured image (shelving allocation information generation section).

For example, the CPU 11 generates the shelving allocation information indicating the layout displayed in the commodity shelf included in the captured image.

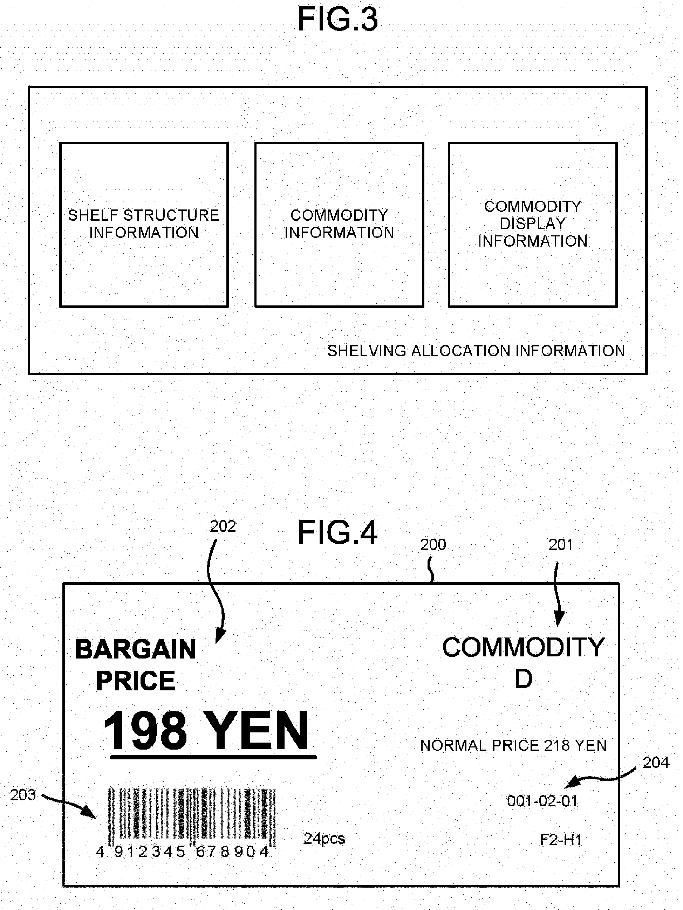

Fig. 3 is a block diagram exemplifying the constitution of the shelving allocation information. As shown in Fig. 3, the shelving allocation information includes shelf structure information, commodity information and commodity display information.

The CPU 11 acquires the shelf structure information.

The shelf structure information indicates the structure of the commodity shelf. For example, the shelf structure information shows the number of segments of the commodity shelf 100, the width, height and depth of each segment, the arrangement method of the commodity, and the like. The commodity arrangement method is a method of arranging the commodity such as loading on a partition plate or hanging on a hook.

For example, the CPU 11 acquires the shelf structure information based on the shelf specifying information. For example, the NVM 14 stores the shelf structure information corresponding to the shelf specifying information in advance. The CPU 11 acquires the shelf structure information corresponding to the shelf specifying information from the NVM 14.

The CPU 11 may acquire the shelf structure information corresponding to the shelf specifying information from an external device such as the commodity server 30.

Further, the CPU 11 may generate the shelf structure information based on the captured image. For example, the CPU 11 extracts the image or image information of the commodity shelf 100 from the captured image and uses image processing to extract the shelf structure 100 such as the number of segments of the commodity shelf. The CPU 11 generates the shelf structure information based on the extracted shelf structure 100 configuration.

The CPU 11 acquires the commodity information corresponding to the commodity specified from the captured image.

For example, the CPU 11 acquires the commodity information corresponding to the commodity from the commodity server 30 via the communication section 17. For example, the CPU 11 transmits a request including the commodity code of the commodity to the commodity server 30, and acquires the commodity information of the commodity as the response to the request.

The commodity information is information associated with or identity of the commodity. For example, the commodity information contains the information displayed in the commodity label. For example, the commodity information is a code obtained by encoding the commodity code (e.g., barcode), a commodity name, a price or discount information. The commodity information may include outer dimensions of the commodity. The commodity information may include a minimum purchase quantity or inventory quantity. The constitution of the commodity information is not limited to a specific constitution.

Further, the CPU 11 generates the commodity display information indicating the layout of the specified commodity.

For example, the CPU 11 generates commodity display information based on the position of the specified commodity. For example, the commodity display information includes position information indicating the segment number of the segment in which the commodity is placed and an order of the commodity in the segment (e.g., in the order of commodities from the left end of the segment) and commodity layout information indicating the layout of the commodity(s) on the shelf or a segment thereof.

For example, the position information is formed in a format of the shelf specifying information-the segment number-the order on the shelf For example, the CPU 11 specifies the number of segments on which the commodity is located from the position(s) of the commodity. The CPU 11 specifies the order in which the shelves are arranged from the relationship with the position of other commodities. The CPU 11 generates the position information from the number of segments and the order.

For example, the commodity layout information is formed in a format of F-H.

F indicates the quantity of a commodities arranged side by side horizontally. H indicates the quantity of a commodity positioned one over the other. For example, the CPU 11 determines F and H from the position of the commodity.

Further, the commodity layout information may include the quantity M of a commodity arranged in a depth direction of the segment or shelf. For example, the CPU 11 may determine M from the depth of the commodity shelf indicated by the shelf structure information and the outer dimensions of the commodity indicated by the commodity information.

The structures of the commodity display information, the position information and the commodity layout information are not limited to specific structures.

In the example shown in Fig. 3, the commodity display information of the commodity D is described as a representative. Herein, the shelf specifying information of the commodity shelf 100 is 001.

The CPU 11 recognizes the two commodities D on the second segment. The CPU 11 recognizes that the commodity D is placed at the beginning (the left end) of the second segment. Therefore, the CPU 11 generates "001 - 02 - 01" as the position information.

The CPU 11 recognizes two commodities D horizontally arranged. The CPU 11 recognizes that the commodity D is not overlapped. Therefore, the CPU 11 generates "F2-H1" as the commodity layout information.

The CPU 11 generates the commodity display information composed of the generated position information and commodity layout information.

The CPU 11 generates the shelving allocation information composed of the generated shelf structure information, commodity information and commodity display information. The shelving allocation information may include the commodity information and the commodity display information corresponding to a plurality of commodities.

The CPU 11 has a function of generating a commodity label (image of the commodity label) which displays the information associated with the commodity based on the shelving allocation information (label generation section).

The commodity label shows at least a part of the commodity information of the shelving allocation information. For example, the commodity label shows the commodity barcode, the commodity name and the price.

The commodity label further shows at least a part of the commodity display information of the shelving allocation information. For example, the commodity label shows the position information and the commodity layout information.

First, the CPU 11 acquires the label format. The label format indicates the layout of the commodity label. For example, the label format indicates the information indicated by the commodity label and the position of the information.

For example, the CPU 11 acquires the label format corresponding to the commodity display information from the commodity server 30 via the communication section 17. For example, the CPU 11 transmits a request including the commodity display information to the commodity server 30, and acquires the label format corresponding to the commodity display information as the response to the request.

The CPU 11 may acquire the label format corresponding to the commodity shelf, the commodity or the commodity information. The NVM 14 stores the label format in advance, and the CPU 11 may acquire the label format from the NVM 14.

The CPU 11 generates the commodity label according to the label format. For example, the CPU 11 arranges all the information constituting the shelving allocation information according to the label format to generate the commodity label. The CPU 11 may generate the commodity label including information not included in the shelving allocation information.

Fig. 4 shows a constitution example of the commodity label. Fig. 4 shows the commodity label (commodity label assigned to the label assignment region 104) of the commodity D shown in Fig. 3. As shown in Fig. 4, a commodity label 200 has a rectangular shape. The commodity label 200 includes display regions 201 to 204.

The display region 201 indicates the commodity name. In the example shown in Fig. 4, the display region 201 indicates "commodity D" as the commodity name.

The display region 202 indicates the price of the commodity. In the example shown in Fig. 4, the display region 202 indicates "198 yen" as the price.

The display region 203 shows the code of the commodity. In the example shown in Fig. 4, the display region 203 shows a barcode acquired by encoding the commodity code of the commodity D.

The display region 204 shows the commodity display information of the commodity. In the example shown in Fig. 4, the display region 204 indicates "001-02-01" as the position information of the commodity display information. The display region 204 indicates "F2-H1" as the commodity layout information of the commodity display information.

The commodity label 200 may indicate a normal price before discount. The commodity label 200 may indicate a character string such as "bargain price" or "discounted price". The constitution of the commodity label is not limited to a specific constitution.

The CPU 11 has a function of printing the commodity label.

For example, if the commodity label is generated, the CPU 11 displays the generated commodity label on the display section 16. The CPU 11 receives an operation of printing the commodity label displayed via the operation section 15. If the operation is received, the CPU 11 transmits the commodity label to the printer 40 via the printer interface 20. The printer 40 prints the transmitted commodity label.

If the commodity shelf has an electronic shelf label, the CPU 11 may transmit the generated commodity label to the electronic shelf label. The electronic shelf label shows the transmitted commodity label.

Next, an operation example of the label generation apparatus 10 is described.

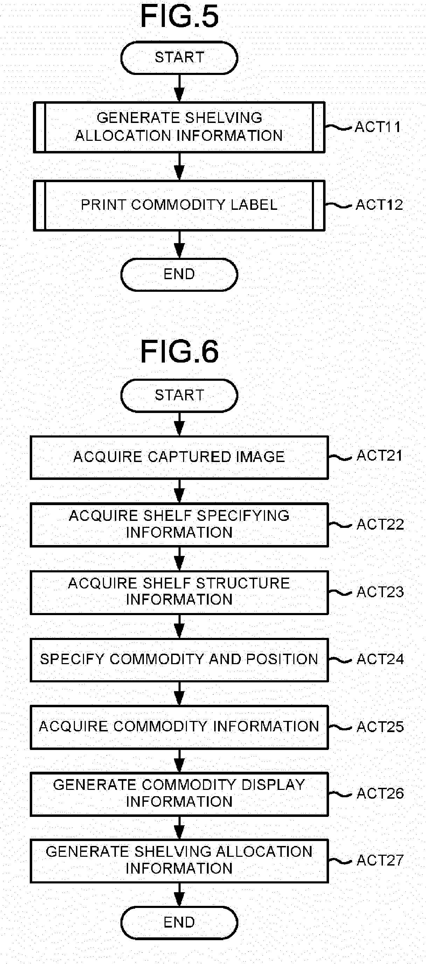

Fig. 5 is a flowchart exemplifying the operation of the label generation apparatus 10.

First, the CPU 11 of the label generation apparatus 10 generates the shelving allocation information (ACT 11). If the shelving allocation information is generated, the CPU 11 prints the commodity label based on the shelving allocation information (ACT 12). If the commodity label is printed, the CPU 11 ends the operation.

Next, an operation example (operation example in ACT 11) in which the CPU 11 generates the shelving allocation information is described.

Fig. 6 is a flowchart exemplifying the operation in which the CPU 11 generates the shelving allocation information.

First, the CPU 11 acquires the captured image including the commodity shelf in the image capturing region (ACT 21). If the captured image is acquired, the CPU 11 acquires the shelf specifying information of the commodity shelf (ACT 22). If the shelf specifying information is acquired, the CPU 11 acquires the shelf structure information of the commodity shelf (ACT 23).

If the shelf structure information is acquired, the CPU 11 specifies the commodity and the position of the commodity from the captured image (ACT 24). If the commodity and the position of the commodity are specified, the CPU 11 acquires the commodity information of the specified commodity (ACT 25). If the commodity information is acquired, the CPU 11 generates the commodity display information from the specified commodity and the position of the commodity (ACT 26).

If the commodity display information is generated, the CPU 11 generates the shelving allocation information based on the shelf structure information, the commodity information and the commodity display information (ACT 27). If the shelving allocation information is generated, the CPU 11 ends the operation.

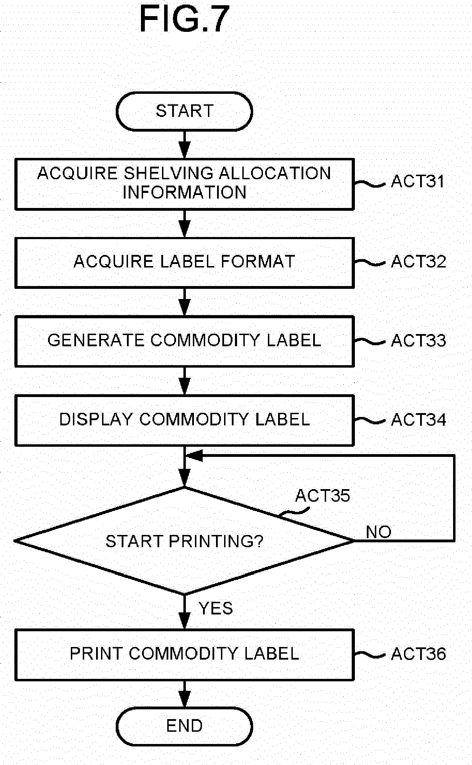

Next, an operation example (operation example in ACT 12) in which the CPU 11 generates the commodity label is described. Fig. 7 is a flowchart exemplifying the operation in which the CPU 11 generates the commodity label.

First, the CPU 11 acquires the shelving allocation information (ACT 31). If the shelving allocation information is acquired, the CPU 11 acquires the label format (ACT 32). If the label format is acquired, the CPU 11 generates the commodity label based on the shelving allocation information and the label format (ACT 33).

If the commodity label is generated, the CPU 11 displays the commodity label on the display section 16 (ACT 34). If the commodity label is displayed, the CPU 11 determines whether an operation to start printing is received via the operation section 15 (ACT 35).

If it is determined that the operation is not received (No in ACT 35), the CPU 11 returns to the processing in ACT 35.

If it is determined that the operation is received (Yes in ACT 35), the CPU 11 prints the commodity label with the printer 40 (ACT 36). If the commodity label is printed, the CPU 11 ends the operation.

If the shelving allocation information includes the commodity information and the commodity display information of a plurality of commodities, the CPU 11 may execute the processing in ACT 32 to ACT 36 for each commodity.

The label generation apparatus 10 may include the printer 40.

The label generation apparatus 10 may not include the camera 19. For example, the label generation apparatus 10 may be connected to an external camera in a wireless or wired manner to acquire the captured image from the camera. The camera may include a removable memory for storing the captured image. The label generation apparatus 10 may acquire the captured image from the memory.

The label generation apparatus configured as described above generates the shelving allocation information indicating the layout of the commodity from the captured image of the commodity shelf where the commodity is arranged. Based on the shelving allocation information, the label generation apparatus generates the commodity label indicating the commodity display information. As a result, the label generation apparatus can generate the commodity label indicating the display layout of the commodity based on the captured image without requiring input of the commodity by the operator.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A label generation apparatus, comprising:
an image acquisition interface;
a printer interface; and
a processor programmed to acquire through the image acquisition interface a captured image including an article and a shelf on which the article is located, to specify information about the article and a position of the article on the shelf based on the captured image, generate shelving allocation information based on the information about the article and the position of the article on the shelf, and communicate with a printer through the printer interface to generate a label of the article based on the shelving allocation information.

2. The label generation apparatus according to claim 1, wherein
the processor is programmed to generate information, including article display information composed of position information indicating the position where the article is located on a shelf and layout information indicating the layout of the article on the shelf, and the label includes at least a part of the article display information thereon.

3. The label generation apparatus according to claim 2, wherein
the label is generated according to a label format corresponding to the article display information.

4. The label generation apparatus according to any one of claims 1 to 3, wherein
the processor is programmed to acquire article information about the article and generate the shelving allocation information including the article information, and
the label indicates at least a portion of the article information.

5. The label generation apparatus according to any one of claims 1 to 4, further comprising a camera connected to the image acquisition interface.

6. The label generation apparatus according to any one of claims 1 to 5, further comprising:
a memory storing images of articles correlated with information about the article, wherein
the processor programmed to compare the captured image to images stored in the memory, to identify article information related to the imaged article.

7. A label generation apparatus, comprising:
an image acquisition interface;
a printer interface; and
a controller circuit configured to compare an image acquired through the image acquisition interface to preexisting image data and identify information about an article in the image, and generate article data and article location data and transmit the article data and article location data through the printer interface.

8. The label generation apparatus according to claim 7, further comprising a camera integrally connected thereto and connected to the controller circuit through the image acquisition interface.

9. The label generation apparatus according to claim 7 or 8, further comprising a printer integrally connected thereto and connected to the controller circuit through the printer interface.

10. The label generation apparatus according to any one of claims 7 to 9, further comprising:
a wireless communication interface through which the controller circuit receives the article data.

11. The label generation apparatus according to claim 10, wherein the article data includes the price of the article and the article location data includes the position of the article on the shelf.

12. The label generation apparatus according to any one of claims 7 to 11, further comprising a non-volatile memory configured to store the preexisting image data.

13. The label generation apparatus according to any one of claims 7 to 12, wherein the article location data is acquired from at least one of the image acquired through the image acquisition interface or the location of the label generation apparatus when the image was acquired.

14. A method for generating an article label indicating a display layout of an article, comprising:
acquiring a captured image containing an image of the article and of a shelf on which the article is located;
specifying information about the article and a position of the article from the captured image;
generating shelf allocation information based on the information about the article and the position of the article; and
generating a label for the article based on the shelf allocation information.

15. The method according to claim 14, further comprising:
comparing the captured image of the article with stored images of articles in a database;
extracting the information about the article from the database; and
generating the label using the information about the article extracted from the database.
